# EUROPÄISCHE PATENTSCHRIFT

(11) **EP 0 668 247 B1**
(45) Veröffentlichungstag und Bekanntmachung des Hinweises auf die Patenterteilung: **29.07.1998**
(21) Anmeldenummer: 94107876.8
(22) Anmeldetag: 21.05.1994
(51) Int. Cl.: C02F 11/12

(54) **Einrichtung zum Behandeln von wässrigem Schlamm**
Apparatus for treating aqueous sludge
Dispositif pour le traitement de boue aqueuse

(30) Priorität: 16.02.1994 DE 4404767
(43) Veröffentlichungstag der Anmeldung: 23.08.1995
(73) Patentinhaber: Wax, Edmund, Dr., 66740 Saarlouis (DE); Kutschke, Gottfried, 46569 Hünxe (DE)
(72) Erfinder: Wax, Edmund, Dr., 66740 Saarlouis (DE); Kutschke, Gottfried, 46569 Hünxe (DE)
(74) Vertreter: Sparing - Röhl - Henseler Patentanwälte

(56) Entgegenhaltungen:
- EP-A- 0 463 292
- WO-A-88/07499
- DE-U- 9 014 300
- DE-U- 9 104 520
- PATENT ABSTRACTS OF JAPAN vol. 18, no. 307 (C-1211) 13. Juni 1994 & JP-A-06 063 599 (OKAMOTO TATSUICHI) 8. März 1994

## Beschreibung

Die Erfindung betrifft eine Einrichtung zum Behandeln von wässrigem Schlamm mit einem auf einem Fahrgestell angeordneten, zylindrischen und im wesentlichen mit seiner Achse horizontal angeordneten Aufnahmebehälter und einer im Aufnahmebehälter mündenden Saugleitung.

Schadstoffbehaftete wässrige Schlämme fallen unter anderem in Sand- oder Schlammfängen, Öl- und Benzinabscheidern, Fettabscheidern o. dgl. an. Ein einfaches Absaugen dieser Wässer und Schlämme zum Entsorgen führt einerseits zu großen Entsorgungsmengen (die als Gefahrgut transportiert werden müssen) und andererseits zur Vergeudung von Wasser.

Aufgabe der Erfindung ist es, eine Einrichtung zum Behandeln von wässrigem Schlamm der eingangs genannten Art zu schaffen, mit der zu deponierende Mengen minimal gehalten und wiederverwendbares Wasser rückgewonnen werden kann.

Diese Aufgabe wird dadurch gelöst, daß der Aufnahmebehälter durch einen hydraulisch verschiebbaren Kolben in zwei durch diesen getrennte Kammerbereiche unterteilt ist, wobei der eine Kammerbereich, in den die Saugleitung mündet, mit dem anderen Kammerbereich, in dem ein Rührer angeordnet ist und in den eine Dosiereinrichtung für zur Behandlung von Wasser dienender Reagenzien und/oder Adsorbenzien mündet, über eine eintrittsseitig durch ein Entwässerungssieb abgedeckte, obere Verbindungsleitung verbunden ist und wobei eine Vorrichtung zum Einspeisen und Verwirbeln des angesaugten wässrigen Schlamms mit einem Flockungsmittel vor und/oder in dem einen Kammerbereich vorgesehen ist.

Weitere Ausgestaltungen der Erfindung sind der nachfolgenden Beschreibung und den Unteransprüchen zu entnehmen.

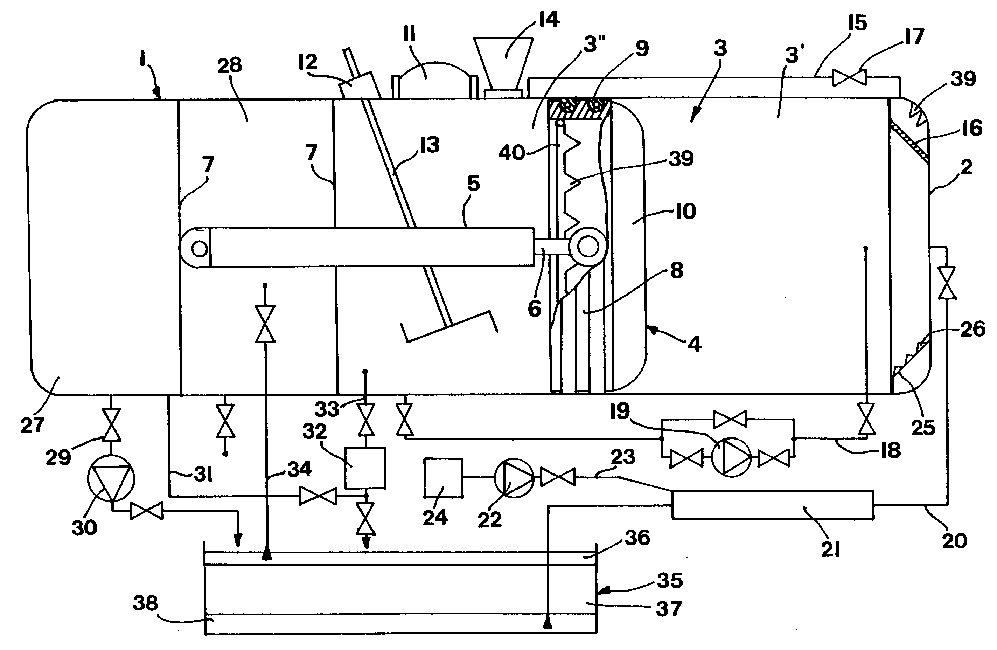

Die Erfindung wird nachstehend anhand eines schematisch in der beigefügten Abbildung dargestellten Ausführungsbeispiels näher erläutert.

Die dargestellte Einrichtung umfaßt einen auf einem Fahrgestell angeordneten, zylindrischen und im wesentlichen mit seiner Achse horizontal angeordneten Aufnahmebehälter 1, der an einem Ende eine hydraulisch aufklappbare, verriegelbare Entleerungstür 2 besitzt. Die Entleerungstür 2 verschließt eine großvolumige Kammer 3, die durch einen Kolben 4 in einen vorderen und einen hinteren Kammerbereich 3', 3'' unterteilt wird. Die Größe der Kammerbereiche 3', 3'' ist von der Stellung des Kolbens 4 abhängig.

Der Kolben 4 ist hydraulisch über eine von einem doppeltwirkenden Hydraulikzylinder 5 betätigte Kolbenstange 6 in Axialrichtung des Aufnahmebehälters 1 verschiebbar. Der Zylinder 5 ist mit seinem dem Kolben 4 abgewandten Ende an einer Zwischenwand 7 des Aufnahmebehälters 1 gelenkig angebracht und abgedichtet durch eine weitere Zwischenwand 7 geführt. Ferner umfaßt der Kolben 4 einen umlaufenden Mantel 8, der eine Dichtungsanordnung 9 zur Abdichtung gegenüber der Innenwand des Aufnahmebehälters 1 aufnimmt. Die Dichtungsanordnung 9 kann beispielsweise von zwei umlaufenden Lippendichtungen gebildet werden, die druckluftbeaufschlagbar von entsprechenden Nuten aufgenommen werden. An dem Mantel 8 ist auswechselbar ein zum Deckel 2 hin gewölbter Kolbenaufsatz 10 befestigt, der geschlossen und damit flüssigkeitsundurchlässig oder aber als Entwässerungssieb ausgebildet sein kann.

Der Kammerbereich 3'' ist über ein Mannloch 11 zugänglich. Ausserdem befindet sich im Kammerbereich 3'' ein über einen Antrieb 12 antreibbarer Rührer 13, der schräg in Richtung auf den Kolben 4 angeordnet ist, so daß ein Verschieben des Kolbens 4 in Richtung auf den Rührer 13 nicht behindert wird. Der Kammerbereich 3'' besitzt ferner oberseitig eine Dosiervorrichtung 14 für zur Behandlung von Wasser dienender Reagenzien und/oder Adsorbenzien, die insbesondere in Pulverform dem im Kammerbereich 3'' befindlichen Wasser zugeführt und in diesem mittels des Rührers 13 verteilt werden.

Die Kammerbereiche 3', 3'' sind über eine Verbindungsleitung 15 oberseitig verbunden, wobei der Zutritt zur Verbindungsleitung 15 von dem Kammerbereich 3' durch ein in letzterem, d.h. im oberen Drittel der Entleerungstür 2 angeordnetes Entwässerungssieb 16 abgedeckt ist. Die Verbindungsleitung 15 weist ein Absperrventil 17 auf.

Vom Kammerbereich 3'' führt eine mit Absperrventilen versehene Rückführleitung 18 mit einem eine Schlammpumpe 19 enthaltenden By-pass in den Kammerbereich 3'.

In den Kammerbereich 3' führt eine Saugleitung 20, die einen statischen Mischer 21 enthält. Dem Saugstrom der Saugleitung 20 sind vor oder im statischen Mischer 21 über eine Pumpe 22 und eine Leitung 23 Flockmittel aus einem Behälter 24 zusetzbar.

Im unteren Drittel der Entleerungstür 2 befindet sich ein Düsenboden 25 mit feinporigen Membrandüsen 26 zum Durchlüften und Durchmischen des in dem Kammerbereich 3' befindlichen Materials.

Der Aufnahmebehälter 1 gemäß dem Ausführungsbeispiel umfaßt zwei weitere Kammern 27, 28, die durch die Zwischenwand 7 voneinander getrennt sind.

Die endseitige Kammer 27 nimmt beispielsweise Wasser auf und besitzt eine Austrittsleitung 29, die zu einer Hochdruckpumpe 30 führt. Außerdem ist eine Zuführleitung 31 zur Kammer 27 vorgesehen, die von einer mit einem (Mikro-)Filter 32 versehenen Abführleitung 33 vom Kammerbereich 3'' abzweigt.

Die zur Kammer 3 benachbarte Kammer 28 ist mit einer Saugleitung 34 verbunden und dient zur Aufnahme von Öl.

Die Funktionsweise der Einrichtung wird nachstehend anhand der Reinigung eines Ölabscheiders 35 bei geschlossenem Kolbenaufsatz 10 erläutert.

In einem Ölabscheider 35 schwimmen Kohlenwasserstoffe 36 insbesondere in Form von Ölen und Benzin auf gelöste bzw. emulgierte Verunreinigungen (z.B. Kohlenwasserstoffe, Chlorkohlenwasserstoffe) enthaltendem Wasser 37, während sich am Boden Schlamm 38 absetzt.

Zur Reinigung eines Ölabscheiders 35 werden zunächst über die Saugleitung 34 die aufschwimmenden Kohlenwasserstoffe 36 (Öle, Benzin) abgesaugt, indem die Kammer 28 an eine Vakuumpumpe angeschlossen wird.

Anschließend wird das im Ölabscheider 35 befindliche Wasser 37 zusammen mit dem Schlamm 38 über die Saugleitung 20 in den Kammerbereich 3' beispielsweise mittels Vakuum gesaugt. Dabei erfolgt eine dosierte Zugabe von Flockmittel über die Pumpe 22, wobei das Flockmittel, etwa flüssige Polyelektrolyte, dem Saugstrom zugesetzt und mittels des statischen Mischers 21 mit diesem innig vermischt wird.

Danach wird der Ölabscheider 35 zusätzlich mittels Hochdruckwasser, das als Frischwasser aus der Kammer 27 entnommen wird, ausgespritzt und damit gereinigt, wobei das dabei anfallende Schmutzwasser ebenfalls über die Saugleitung 20 in den Kammerbereich 3' gefördert wird.

Das aus Wasser, Verunreinigungen und Schlamm bestehende Gemisch im Kammerbereich 3' wird dann mittels der Membrandüsen 26 mit Druckluft durchlüftet und homogen vermischt. Der Schlamm und das ausgeflockte Material sedimentieren. Anschließend wird der Kolben 4 in Richtung auf die Entleerungstür 2 mengenorientiert gesteuert verfahren. Hierdurch wird das im Kammerbereich 3' befindliche Material zusammengedrückt und das überstehende Wasser über die Leitung 15 in dem Kammerbereich 3'' überführt, wobei das Entwässerungssieb 16 ein übertreten von Schlamm- oder Flockungspartikeln in den Kammerbereich 3'' verhindert.

Das in den Kammerbereich 3'' überführte Wasser wird mittels der über die Dosiervorrichtung 14 zugeführten Stoffe, die durch den Rührer 13 im Wasser verteilt werden, behandelt. Dieser Vorgang ist über das Mannloch 11 kontrollierbar. Der Wasserpegel kann im übrigen durch entsprechendes Verfahren des Kolbens 4 eingestellt werden. Nach entsprechender Reaktionszeit werden enthaltene Kohlenwasserstoffe und Schwebstoffe adsorbiert. Die davon gebildeten Sedimentationen können über die Rückführleitung 18 in dem Kammerbereich 3' überführt werden, wozu im Saugbetrieb die Schlammpumpe 19 nicht benötigt wird. Das im Kammerbereich 3'' erzeugte Frischwasser wird über die Leitung 33 und den Filter 32 zurück in den Ölabscheider 35 gefördert, so daß dieser wieder betriebsbereit ist. Weiteres Frischwasser wird über die Leitung 31 zurück in die Kammer 27 gefördert.

Gegebenenfalls können im Kammerbereich 3'' auch mittels zugesetzter Fällungsreagenzien oder dergleichen Schwermetalle ausgefällt werden, auch wenn diese komplex gebunden vorliegen.

Das im wesentlichen entwässerte Material im Kammerbereich 3' kann bei geöffneter Entleerungstür 2 mittels des Kolbens 4 ausgeschoben werden.

Wenn der Kolbenaufsatz 10 von einem Entwässerungssieb gebildet wird, wird der Inhalt des Ölabscheiders 35 zweckmäßigerweise über eine Pumpe in den Kammerbereich 3' gefördert, wobei dann das Wasser vor allem durch den Kolben 4 hindurch in den Kammerbereich 3'' übertritt. Die Sedimente aus dem Kammerbereich 3'' werden mittels der Schlammpumpe 19 in den Kammerbereich 3' überführt.

Zum Säubern der Entwässerungssiebe 16 und des Kolbenaufsatzes 10 können entsprechende, von der Hochdruckpumpe 30 speisbare Hochdruckwaschdüsen 39 vorgesehen sein, die im Mantel 8 des Kolbens 4 an einer Ringleitung 40 angeschlossen sein können.

Die Vorrichtung zum Einspeisen von Flockmittel und Verwirbeln von diesem im geförderten Material kann auch eine wasserstrahlpumpenartige Einspeiseeinrichtung zumindest für Luft, gegebenenfalls zusammen mit dem Flockmittel, das aber auch getrennt eingespeist werden kann, umfassen.

Als Kammern 27, 28 können auch vom Aufnahmebehälter 1 getrennt ausgebildete Aufnahmebehälter vorgesehen sein, obwohl die dargestellte Anordnung insofern bevorzugt wird.

Die Einrichtung ermöglicht es, das Volumen der Abscheiderinhalte um etwa 70 bis 80% zu verringern, daß die Einrichtung mehrfach hintereinander einsetzbar ist, ohne eine Entleerung vornehmen zu müssen.

Zwischen dem den Aufnahmebehälter 1 tragenden Fahrzeugchassis und einem Hilfsrahmen können Lastzellen angeordnet sein, durch die die Mengen an unterschiedlichen Medien in den einzelnen Kammern meßbar sind, wobei die Meßwerte angezeigt werden können und ausdruckbar sind.

Gegebenenfalls kann auch eine infrarotspektrometrische Überwachungseinrichtung vorgesehen sein, um Kohlenwasserstoffe auf ihren Einleitwert hin zu überprüfen.

## Patentansprüche

1. Einrichtung zum Behandeln von wässrigem Schlamm mit einem auf einem Fahrgestell angeordneten, zylindrischen und im wesentlichen mit seiner Achse horizontal angeordneten Aufnahmebehälter (1) und einer im Aufnahmebehälter (1) mündenden Saugleitung (20), dadurch **gekennzeichnet**, daß der Aufnahmebehälter (1) durch einen hydraulisch verschiebbaren Kolben (4) in zwei durch diesen getrennte Kammerbereiche (3', 3'') unterteilt ist, wobei der eine Kammerbereich (3'), in den die Saugleitung (20) mündet, mit dem anderen Kammerbereich (3''), in dem ein Rührer (13) angeordnet ist und in den eine Dosiereinrichtung (14) für zur Behandlung von Wasser dienender Reagenzien und/oder Adsorbenzien mündet, über eine eintrittsseitig durch ein Entwässerungssieb (16) abgedeckte, obere Verbindungsleitung (15) verbunden ist und wobei eine Vorrichtung (21, 22, 23, 25, 26) zum Einspeisen und Verwirbeln des angesaugten wässrigen Schlamms mit einem Flockungsmittel vor und/oder in dem einen Kammerbereich (3') vorgesehen ist.

2. Einrichtung nach Anspruch 1, dadurch gekennzeichnet, daß die Vorrichtung (21, 22, 23) zum Einspeisen und Verwirbeln einen statischen Mischer (21) in der Saugleitung (20) umfaßt.

3. Einrichtung nach Anspruch 1 oder 2, dadurch gekennzeichnet, daß die Vorrichtung (21, 22, 23, 25, 26) zum Einspeisen und Verwirbeln Druckluftdüsen (26) im Bodenbereich des einen Kammerbereichs (3') umfaßt.

4. Einrichtung nach einem der Ansprüche 1 bis 3, dadurch gekennzeichnet, daß die Vorrichtung (21, 22, 23, 25, 26) zum Einspeisen und Verwirbeln eine wasserstrahlpumpenartige Einspeiseeinrichtung zumindest für Luft umfaßt.

5. Einrichtung nach einem der Ansprüche 1 bis 4, dadurch gekennzeichnet, daß der Kolben (4) einen Kolbenaufsatz (10) aufweist, der von einem Entwässerungssieb gebildet wird.

6. Einrichtung nach einem der Ansprüche 1 bis 4, dadurch gekennzeichnet, daß der Kolben (4) geschlossen ist.

7. Einrichtung nach einem der Ansprüche 1 bis 6, dadurch gekennzeichnet, daß der Kolben (4) einen austauschbaren, stirnseitigen, als Entwässerungssieb oder geschlossen ausgebildeten Kolbenaufsatz (10) aufweist.

8. Einrichtung nach einem der Ansprüche 1 bis 7, dadurch gekennzeichnet, daß der andere Kammerbereich (3'') bodenseitig über eine Rückführleitung (18) mit dem einen Kammerbereich (3') verbunden ist.

9. Einrichtung nach einem der Ansprüche 1 bis 8, dadurch gekennzeichnet, daß der Aufnahmebehälter (1) wenigstens eine zusätzliche Kammer (27, 28) für Wasser bzw. Öl aufweist.

10. Einrichtung nach Anspruch 9, dadurch gekennzeichnet, daß ein Zylinder (5) zum Verfahren der Kolbenstange (6) des Kolbens (4) mit ihrem dem Kolben (4) abgewandten Ende an einer dem anderen Kammerbereich (3'') abgewandten Wand (7) der zusätzlichen Kammer (28) gehalten ist.

11. Einrichtung nach einem der Ansprüche 1 bis 10, dadurch gekennzeichnet, daß ein Zylinder (5) zum Verfahren der Kolbenstange (6) bzw. die Kolbenstange (6) des Kolbens (4) mit dem dem Kolben (4) abgewandten Ende gelenkig an einer Wand (7) des Aufnahmebehälters (1) befestigt ist.

12. Einrichtung nach einem der Ansprüche 1 bis 11, dadurch gekennzeichnet, daß Hochdruckwaschdüsen (39) zum Reinigen der Entwässerungssiebe (16 bzw. 10) vorgesehen sind.

## Claims

1. Apparatus for treating aqueous sludge with a cylindrical receiving container (1) located on a chassis and arranged substantially with its axis horizontal and a suction line (20) opening into the receiving container (1), characterised in that the receiving container (1) is divided by a hydraulically displaceable piston (4) into two chamber regions (3', 3'') separated by the latter, in which case one chamber region (3'), into which the suction line (20) opens, being connected to the other chamber region (3''), in which a stirrer (13) is located and into which opens a dosing device (14) for reagents and/or adsorbents serving for the treatment of water, by way of an upper connecting pipe (15) covered at the inlet side by a drainage screen (16) and in which case a device (21, 22, 23, 25, 26) is provided for feeding and setting in turbulence the aqueous sludge sucked in, with a flocculating agent before and/or in one chamber region (3').

2. Apparatus according to Claim 1, characterised in that the device (21, 22, 23) for feeding and setting in turbulence comprises a static mixer (21) in the suction line (20).

3. Apparatus according to Claim 1 or 2, characterised in that the device (21, 22, 23, 25, 26) for feeding and setting in turbulence comprises compressed air nozzles (26) in the base region of one chamber region (3').

4. Apparatus according to one of Claims 1 to 3, characterised in that the device (21, 22, 23, 25, 26) for feeding and setting in turbulence comprises a water jet pump-like feed device at least for air.

5. Apparatus according to one of Claims 1 to 4, characterised in that the piston (4) comprises a piston attachment (10), which is formed by a drainage screen.

6. Apparatus according to one of Claims 1 to 4, characterised in that the piston (4) is closed.

7. Apparatus according to one of Claims 1 to 6, characterised in that the piston (4) comprises an exchangeable piston attachment (10) on its end face, which is constructed as a drainage screen or is closed.

8. Apparatus according to one of Claims 1 to 7, characterised in that the other chamber region (3'') is connected at its base by way of a return line (18) to one chamber region (3').

9. Apparatus according to one of Claims 1 to 8, characterised in that the receiving container (1) comprises at least one additional chamber (27, 28) for water or oil.

10. Apparatus according to Claim 9, characterised in that a cylinder (5) for the displacement of the piston rod (6) of the piston (4) is held by its end remote from the piston (4) on a wall (7) of the additional chamber (28) remote from the other chamber region (3'').

11. Apparatus according to one of Claims 1 to 10, characterised in that a cylinder (5) for the displacement of the piston rod (6) or the piston rod (6) of the piston (4) is attached by the end remote from the piston (4) pivotally to a wall (7) of the receiving container (1).

12. Apparatus according to one of Claims 1 to 11, characterised in that high pressure washing nozzles (39) are provided for cleaning the drainage screens (16 or 10).

## Revendications

1. Dispositif de traitement de bornes aqueuses, comportant, disposé sur un châssis roulant, un récipient (1) cylindrique et dont l'axe est horizontal, ainsi qu'une tuyauterie d'aspiration (20) débouchant dans ce récipient (1), caractérisé en ce que le récipient (1) est divisé par un piston hydrauliquement mobile (4) en deux chambres séparées (3', 3''), l'une des chambres (3') dans laquelle débouche la tuyauterie d'aspiration (20) étant reliée à l'autre chambre (3'') dans laquelle est disposé un agitateur (13) et dans laquelle débouche un dispositif de dosage (14) pour des réactifs et/ou des adsorbants servant au traitement de l'eau, cette liaison s'effectuant au moyen d'une conduite de liaison (15) supérieure recouverte du côté de l'entrée par un tamis de déshydratation (16), avec présence en amont et/ou à l'intérieur de l'une des chambres (3') d'un dispositif (21, 22, 23, 25, 26) pour alimenter avec un agent de flocage et mettre en turbulence les bornes aqueuses aspirées.

2. Dispositif selon la revendication 1, caractérisé en ce que le dispositif (21, 22, 23) d'alimentation et de mise en turbulence comprend un mélangeur statique (21) placé à l'intérieur de la tuyauterie d'aspiration (20).

3. Dispositif selon la revendication 1 ou 2, caractérisé en ce que le dispositif (21, 22, 23, 25, 26) d'alimentation et de mise en turbulence comprend des buses à air comprimé (26) situées dans la région du fond de l'une des chambres (3').

4. Dispositif selon l'une des revendications 1 à 3, caractérisé en ce que le dispositif (21, 22, 23, 25, 26) d'alimentation et de mise en turbulence comprend au moins un dispositif d'alimentation d'air du type pompe à trombe d'eau.

5. Dispositif selon l'une des revendications 1 à 4, caractérisé en ce que le piston (4) présente un embout (10) qui est constitué par un tamis de déshydratation.

6. Dispositif selon l'une des revendications 1 à 4, caractérisé en ce que le piston (4) est fermé.

7. Dispositif selon l'une des revendications 1 à 6, caractérisé en ce que le piston (4) présente un embout (10) interchangeable monté du côté frontal, ou bien en forme de tamis de déshydratation, ou bien fermé.

8. Dispositif selon l'une des revendications 1 à 7, caractérisé en ce que la deuxième chambre (3'') est reliée du côté du fond par une conduite de retour (18) à la première chambre (3').

9. Dispositif selon l'une des revendications 1 à 8, caractérisé en ce que le récipient (1) présente au moins une chambre supplémentaire (27, 28) pour de l'eau ou de l'huile.

10. Dispositif selon la revendication 9, caractérisé en ce que, sur une paroi (7), opposée à la deuxième chambre (3''), de la chambre supplémentaire (28), est fixé un vérin (5) servant à déplacer la tige (6) du piston (4) par son extrémité opposée audit piston (4).

11. Dispositif selon l'une des revendications 1 à 10, caractérisé en ce qu'un vérin (5) servant à déplacer la tige de piston (6), à savoir la tige (6) du piston (4) par son extrémité opposée audit piston (4), est fixé de manière articulée sur une paroi (7) du récipient (1).

12. Dispositif selon l'une des revendications 1 à 11, caractérisé en ce que, pour le nettoyage des tamis de déshydratation (16 et 10), sont prévues des buses (39) de lavage sous haute pression.
